Europäisches Patentamt

European Patent Office

Office européen des brevets

(11) Numéro de publication : **0 072 734**
**B1**

# (12) FASCICULE DE BREVET EUROPÉEN

(45) Date de publication du fascicule du brevet :
26.06.85

(21) Numéro de dépôt : 82401469.0

(22) Date de dépôt : 04.08.82

(51) Int. Cl.⁴ : **C 08 F218/08** // (C08F218/08,
210:00)

(54) Procédé de préparation de latex de copolymères acétate de vinyle-oléfine.

(30) Priorité : 10.08.81 FR 8115437

(43) Date de publication de la demande :
23.02.83 Bulletin 83/08

(45) Mention de la délivrance du brevet :
26.06.85 Bulletin 85/26

(84) Etats contractants désignés :
AT BE CH DE FR GB IT LI NL SE

(56) Documents cités :
DE-B- 1 180 133
FR-A- 1 479 750
Le dossier contient des informations techniques présentées postérieurement au dépôt de la demande et
ne figurant pas dans le présent fascicule.

(73) Titulaire : RHONE-POULENC SPECIALITES CHIMI-
QUES
"Les Miroirs" 18, Avenue d'Alsace
F-92400 Courbevoie (FR)

(72) Inventeur : Schuppiser, Jean-Luc
12, Allée d'Apollon Gressy
F-77410 Claye-Souilly (FR)
Inventeur : Daniel, Jean-Claude
13, rue de Neuilly
F-94120 Fontenay-sous-Bois (FR)

(74) Mandataire : Lepère, Michelle et al
RHONE POULENC RECHERCHES Service Brevets
Chimie et Polymères 25, Quai Paul Doumer
F-92408 Courbevoie Cedex (FR)

Jouve, 18, rue St-Denis, 75001 Paris, France

**0 072 734**

**Description**

L'invention a pour objet un procédé de préparation de latex de copolymères acétate de vinyle-oléfine, ainsi que les latex de copolymères obtenus par ledit procédé.

Les latex de copolymères acétate de vinyle-oléfine sont généralement utilisés comme liants dans la fabrication de colles, peintures, textiles et papiers. Ils sont préparés par polymérisation en émulsion de l'acétate de vinyle et de l'oléfine, en présence d'éthers de cellulose, d'alcools polyvinyliques, ou de polyvinylpyrrolidone comme colloïdes protecteurs. Ces colloïdes protecteurs confèrent aux latex une bonne stabilité au stockage et aux manipulations, ainsi qu'une certaine viscosité nécessaire à leurs applications, mais également une sensibilité à l'eau des films de copolymères nuisible aux applications envisagées.

Il est également connu d'après le brevet français n° 1 479 750 de préparer des latex de polymères ou copolymères d'esters vinyliques en présence d'un colloïde protecteur obtenu par copolymérisation dans l'eau d'acrylamide, méthacrylamide et d'acide acrylique et/ou méthacrylique en présence d'un dérivé tensio-actif non ionique et/ou anionique de polyalcoylène-oxyde.

Le procédé objet de l'invention permet d'obtenir des latex de copolymères acétate de vinyle-oléfine qui possèdent une bonne stabilité au stockage et aux manipulations et la viscosité nécessaire à leurs applications et dont les films de copolymères présentent une très bonne tenue à l'eau.

Le procédé selon l'invention consiste à copolymériser en émulsion aqueuse de l'acétate de vinyle avec au moins une oléfine et éventuellement au moins un autre monomère copolymérisable en présence d'un initiateur, d'un émulsifiant et d'un colloïde protecteur et est caractérisé en ce que le colloïde protecteur est constitué a) d'un polymère soluble dans l'eau des amides des acides acrylique et méthacrylique et de leurs dérivés N-alkylés substitués ou non et b) d'un polymère d'éthylène glycol, de masse moléculaire comprise entre 1 000 et 50 000, soluble dans l'eau.

Le polymère d'amide soluble dans l'eau, premier constituant du colloïde protecteur, est un homopolymère ou un copolymère en toutes proportions ou encore un mélange d'au moins un homopolymère et/ou d'au moins un copolymère des amides des acides acrylique et méthacrylique et de leurs dérivés N-alkylés, dont le groupe alkyle possède 1 à 4 atomes de carbone et peut être substitué par des groupes amine, hydroxy ou alcoxy possédant 1 à 4 atomes de carbone.

Parmi ces amides peuvent être cités, par exemple, l'acrylamide, le méthacrylamide, le N-méthylacrylamide, le N,N-diméthylacrylamide, le N-isopropylacrylamide, le N-méthylaminoisopropylacrylamide, le N-méthylolacrylamide, le N-méthylolméthacrylamide, le N-méthoxyméthylacrylamide et le N-isobutoxyméthylacrylamide.

Le polymère d'amide soluble dans l'eau peut être préparé par exemple par polymérisation en solution aqueuse d'au moins un amide, à une concentration de 0,1 à 7 % en poids, en présence d'un initiateur radicalaire hydrosoluble et/ou de rayonnements ultra-violets, à une température comprise entre 0 et 90 °C.

L'initiateur à mettre en œuvre est un initiateur radicalaire hydrosoluble classique de la polymérisation en solution, tel que l'eau oxygénée, les persulfates alcalins, les dérivés diazoïques hydrosolubles ou les systèmes redox à base d'oxydants comme l'eau oxygénée, les peroxydes ou hydroperoxydes organiques et de réducteurs comme les sulfites et bisulfites alcalins, les amines, l'hydrazine ou les formaldéhyldesulfoxylates métalliques. Tous ces initiateurs sont mis en œuvre seuls ou en mélange, à raison de 0,1 à 10 % en poids du ou des amide(s).

Le polymère d'amide soluble dans l'eau peut être réticulé par des quantités pouvant aller jusqu'à 50 % en poids du ou des amides d'agents réticulants hydrosolubles représentés par les N,N'-alkylidène ayant 1 à 4 atomes de carbone bis(amide d'acide insaturé ayant 3 à 5 atomes de carbone) tels que N,N'-méthylène bis (acrylamide) ou N,N'-méthylène bis (méthacrylamide), l'éther diallylique, le sulfosuccinate diallylique ou l'oxyéthane polyallylique.

Le polymère d'éthylène glycol, deuxième constituant du colloïde protecteur, est soluble dans l'eau et possède une masse moléculaire comprise entre 1 000 et 50 000 et de préférence entre 3 000 et 35 000. Il est représenté par les homopolymères d'éthylène glycol et les mélanges d'au moins deux homopolymères de masse moléculaire différente. Ces polymères sont des produits en eux-mêmes connus et commercialisés.

Dans le nouveau procédé de polymérisation, le colloïde protecteur est constitué de 15 à 70 % en poids du polymère d'amide et de 30 à 85 % en poids du polymère d'éthylène glycol et il est utilisé à raison de 0,1 à 5 % et de préférence 0,5 à 3 % en poids des monomères à polymériser.

Les deux constituants du colloïde protecteur sont mis en œuvre sous forme de solutions aqueuses.

La solution du polymère d'amide peut être utilisée à tout moment après sa préparation, mais, selon une forme préférée de l'invention, elle est utilisée immédiatement après sa préparation.

Les deux solutions peuvent être introduites séparément dans le milieu de polymérisation en émulsion, ou bien le polymère d'éthylène glycol peut être dissous dans la solution de polymère d'amide, ou encore, et cela constitue une forme préférentielle de l'invention, le polymère d'éthylène glycol peut être ajouté à la solution d'amide(s) avant sa polymérisation. Ces introductions sont effectuées soit en une seule fois avant polymérisation, soit en cours de polymérisation par fractions successives ou en continu.

2

# 0 072 734

Dans la ou les solutions aqueuses à utiliser, le polymère d'amide plus le polymère d'éthylène glycol représentent de 0,1 à 15 % en poids de l'eau.

Les oléfines qui peuvent être copolymérisées avec l'acétate de vinyle, par le nouveau procédé, possèdent 2 à 4 atomes de carbone et sont représentées par l'éthylène, le propylène et les butènes.

Par autres monomères copolymérisables, on entend les esters vinyliques d'acides monocarboxyliques saturés ramifiés ou non ayant de 1 à 12 atomes de carbone, comme le propionate, le « Versatate » (marque déposée pour des mélanges d'esters d'acides ramifiés en $C_9$ à $C_{11}$), le pivalate, le laurate de vinyle et/ou les esters d'acides insaturés mono-ou di-carboxyliques possédant 3 à 6 atomes de carbone et d'alcools possédant 1 à 10 atomes de carbone, comme les acrylates, méthacrylates, maléates ou fumarates de méthyle, d'éthyle, de butyle ou d'éthylhexyle, ainsi que les halogénures de vinyle et de vinylidène, comme le chlorure de vinyle ou le chlorure de vinylidène.

Ces monomères copolymérisables peuvent être polymérisés avec l'acétate de vinyle et au moins une oléfine, ou bien être greffés sur le copolymère acétate de vinyle-oléfine.

Les oléfines et autres comonomères sont mis en œuvre en quantités telles que la température de transition vitreuse du copolymère obtenu soit comprise entre – 30 et 50 °C et de préférence entre – 20 et 35 °C.

Suivant le procédé, les monomères sont introduits dans le milieu de polymérisation, sous pression si le monomère est gazeux, soit en totalité avant polymérisation, ou en cours de polymérisation par fractions successives ou en continu, soit en partie avant polymérisation et l'autre partie en cours de polymérisation par fractions successives ou en continu.

Suivant le polymère à obtenir, il est possible d'ajouter aux monomères un monomère réticulant et/ou un agent limiteur de chaîne.

Le monomère réticulant, mis en œuvre en proportions comprises entre 0 et 10 % et de préférence entre 0 et 3 % en poids par rapport aux monomères, est représenté plus particulièrement par les acrylate et méthacrylate de vinyle, le divinyléther, les acrylates et méthacrylates de mono- ou poly-alkylène ($C_2$-$C_4$) glycol, le phtalate d'allyle, le cyanurate de triallyle, le tétraallyloxyéthane, les diallylsulfosuccinates alcalins et les condensats d'acides carboxyliques ($C_3$-$C_5$) insaturés et de polyols, comme par exemple, les acrylate et méthacrylate de triméthylolpropane.

L'agent limiteur de chaîne, mis en œuvre en proportions comprises entre 0 et 10 et de préférence entre 0 et 3 % en poids par rapport aux monomères, est représenté, entre autres par les hydrocarbures halogénés, tels que chlorure de méthylène, chloroforme, tétrachlorure de carbone, bromoforme, tétrabromure de carbone, dichloréthane et trichloréthane, les alcools aliphatiques ayant 1 à 4 atomes de carbone, tels que alcool méthylique et alcool allylique, et de préférence par les mercaptans, tels que laurylmercaptan, dodécylmercaptan et aminophénylmercaptan.

Le monomère réticulant et/ou l'agent limiteur de chaîne sont introduits seuls ou en mélange, de toute façon connue en soit, avant ou en cours de polymérisation, par exemple en même temps que les monomères ou en même temps que l'un des monomères, soit simultanément, soit plus particulièrement en solution dans l'un des monomères ou en solution dans le mélange des monomères.

La concentration en monomères du milieu de polymérisation est avantageusement comprise entre 10 et 70 % en poids.

En tant qu'initiateur, on utilise un initiateur hydrosoluble classique de la polymérisation en émulsion et plus particulièrement l'eau oxygénée, les persulfates alcalins, les dérivés diazoïques hydrosolubles ou les systèmes redox à base d'oxydants comme l'eau oxygénée, les peroxydes ou hydroperoxydes organiques et de réducteurs comme les sulfites et bisulfites alcalins, les amines, l'hydrazine ou les formaldéhydesulfoxylates métalliques. L'initiateur est mis en œuvre dans des proportions de l'ordre de 0,05 à 4,5 % et de préférence 0,1 à 2 % en poids des monomères. Il est introduit dans le milieu de polymérisation en totalité avant polymérisation ou en cours de polymérisation par fractions successives ou en continu, ou encore en partie avant polymérisation, l'autre partie étant ajoutée en cours de polymérisation par fractions successives ou en continu, parrticulièrement lorsque la durée de vie de l'initiateur à la température de polymérisation est faible.

Afin d'assurer la stabilité du milieu réactionnel et du latex à obtenir, un ou plusieurs agents émulsifiants peut ou peuvent être présents dans le milieu réactionnel. Ces agents émulsifiants peuvent être anioniques et/ou non ioniques et sont des produits classiques des polymérisations en émulsion.

Parmi les agents émulsifiants anioniques, peuvent être cités les sels d'acides gras ; les alkylsulfates, alkylsulfonates, alkylarylsulfonates, alkylsulfosuccinates, alkylphosphates alcalins ; les sulfonates d'éthers alkylphénolpolyglycoliques ; les sels d'esters d'acides alkylsulfopolycarboxyliques ; les produits de condensation des acides gras avec les acides oxy- et amino-alcane-sulfoniques ; les dérivés sulfatés des éthers polyglycoliques ; les esters sulfatés d'acides gras et de polyglycols ; les alcanolamides d'acides gras sulfatés.

Parmi les agents émulsifiants non ioniques, sont à mentionner les esters gras de polyalcools, les alcanolamides d'acides gras, les copolyoxydes d'éthylène et de propylène, les alcools et alkylphénols oxyéthylénés, les alcools et alkylphénols oxyéthylénés et sulfatés.

Les quantités d'agent(s) émulsifiant(s) à mettre en œuvre sont de l'ordre de 0,1 à 3 % en poids par rapport aux monomères et leur introduction dans le milieu réactionnel peut être effectuée soit en totalité avant la polymérisation, soit en partie avant la polymérisation, la partie complémentaire étant ajoutée au

3

milieu réactionnel au cours de la polymérisation par fractions successives ou en continu, soit encore en totalité au cours de la polymérisation par fractions successives ou en continu, suivant le diamètre moyen des particules du latex à obtenir. Selon une forme particulière de réalisation de l'invention, l'agent émulsifiant est ajouté au milieu de préparation du polymère d'amide(s), premier constituant du colloïde protecteur.

Selon la nature des monomères mis en œuvre et afin d'éviter l'hydrolyse du copolymère, il peut être avantageux de maintenir le milieu de polymérisation à un pH de 3 à 7. Ce qui peut être obtenu par addition au milieu d'un régulateur de pH représenté notamment par une base, telle que la soude ou l'ammoniaque et/ou par un tampon, tel que l'acétate de sodium, le bicarbonate de sodium ou le borax. Le régulateur est ajouté au milieu, seul ou en mélange, en totalité ou en partie avant la polymérisation, la partie complémentaire étant ajoutée au cours de la polymérisation par fractions successives ou en continu, ou encore en totalité au cours de la polymérisation par fractions successives ou en continu et plus particulièrement dans le milieu de préparation du polymère d'amide, premier constituant du colloïde protecteur.

La température de polymérisation, fonction de l'initiateur mis en œuvre et du copolymère à obtenir, est généralement comprise entre 0 et 95 °C et de préférence entre 20 et 90 °C.

Selon une variante, le procédé, tel que décrit ci-dessus, est effectué en présence d'un polymère semence, ce qui assure un meilleur contrôle de la granulométrie des particules du latex à obtenir. Ce polymère semence peut être semblable ou différent du polymère à obtenir. Il est obtenu par polymérisation en émulsion aqueuse d'acétate de vinyle ou d'acétate de vinyle et d'oléfine, et/ou d'au moins un des comonomères énumérés plus haut. Le latex de polymère semence obtenu est ajouté au milieu de polymérisation en même temps que l'un des constituants du colloïde protecteur ou en même temps que le mélange de ces deux constituants, ou bien est préparé en présence d'un de ces constituants ou des deux constituants du colloïde protecteur.

Suivant l'application envisagée du latex, il est possible d'ajouter, avant, pendant ou après polymérisation, un agent de plastification dans des proportions comprises entre 0 et 20 % et de préférence entre 0 et 10 % en poids par rapport au copolymère. Cet agent de plastification, mis en œuvre seul ou en mélange, est choisi parmi les plastifiants et agents de coalescence classiques du polyacétate de vinyle, tels que les phatalates d'alkyle ($C_4$-$C_6$) halogénés ou non, comme les phtalates de dibutyle, de diéthyle et de trichloréthyle, les phtalate, adipate et dibenzoate d'éthylène glycol, l'acétate de butylcarbitol, le glycolate de butyle, la triacétine de glycérol, les succinates, glutarates, adipates dipropyliques ou diisobutyliques et les phosphates de tricrésyle et de triphényle.

Les latex de copolymères acétate de vinyle-oléfine obtenus possèdent une concentration de 10 à 70 % et de préférence 35 à 65 % en poids de particules de copolymères ayant une température de transition vitreuse comprise entre − 30 et 50 °C, dont la granulométrie étroite ou étalée est comprise entre 0,05 et 1 μm. Les latex présentent un domaine étendu de viscosité allant de quelques mPa.s à 80 000 mPa.s et de préférence de 50 à 30 000 mPa.s, et donnent des films ayant une très bonne tenue à l'eau.

Les latex sont utilisés comme liants dans la fabrication des peintures, colles, papiers, textiles, plus particulièrement non tissés, revêtements de sol, additifs pour mortiers.

On donne ci-après, à titre indicatif et non limitatif, des exemples de réalisation de l'invention, dans lesquels :
— les pourcentages sont en poids ;
— la viscosité du latex est mesurée à 20 °C, au viscosimètre Brookfield RVT, vitesse 50 t/min ;
— le diamètre des particules est mesuré par microscopie électronique ;
— la température de transition vitreuse du copolymère (Tg) est mesurée par analyse calorimétrique différentielle ;
— la tenue à l'eau est déterminée en plaçant une goutte d'eau déminéralisée sur un film de 300 μm obtenu par dépôt du latex sur une plaque de verre transparent, suivi d'un séchage 2 h à 50 °C, puis 24 h à température ambiante. La tenue à l'eau est exprimée par le temps nécessaire pour que le film s'opacifie à l'emplacement de la goutte d'eau.

Exemple 1

Préparation du colloïde protecteur

Dans un réacteur muni d'un réfrigérant, d'une arrivée d'azote et d'un agitateur, sont introduits :

— 1 050 g d'eau désionisée ;
— 13,5 g d'acrylamide ;
— 1 g de N,N′-méthylène bis(acrylamide) ;
— 0,5 g d'acétate de sodium ;
— 71 g d'une solution aqueuse à 26,5 % de tétradécylsulfonate de sodium ;
— 19 g de polyéthylène glycol de masse moléculaire 6 000.

4

L'air est éliminé par passage d'un courant d'azote, qui est maintenu et le mélange est agité. Après dissolution, la solution est chauffée à 60 °C.

Dès que la solution est à 60 °C, 0,7 g de persulfate d'ammonium en solution dans 50 cm³ d'eau sont introduits et la solution est maintenue à 60 °C pendant 1 heure. Le passage du courant d'azote est alors interrompu.

Polymérisation

Le vide est fait dans le réacteur, puis à la solution de colloide obtenue, 5 g de persulfate de potassium en solution dans 50 cm³ d'eau sont ajoutés. Est introduit ensuite, en continu, à débit constant en 3 heures, un mélange de 1 520 g d'acétate de vinyle et de 190 g de « Versatate VEOVA 10 » (marque déposée).

Le « Versatate VEOVA 10 » est un mélange d'esters vinyliques monocarboxyliques ramifiés en $C_9$ à $C_{11}$.

Après 15 minutes du début de l'introduction, on effectue simultanément :
— l'introduction de 190 g d'isobutène à débit constant en 1 heure ;
— le chauffage du mélange réactionnel à 80 °C, température qui est ensuite maintenue ;
— l'introduction de 19 g de persulfate de potassium dans 200 cm³ d'eau à débit constant en 2 h 45 min.

Deux heures après la fin des introductions, le mélange réactionnel est refroidi.

Un latex de terpolymère acétate de vinyle/isobutène/« Versatate VEOVA 10 »® 80/10/10 est obtenu, qui présente les caractéristiques suivantes :

| | |
|---|---|
| — pH | 2,8 |
| — viscosité | 1 280 mPa.s |
| — concentration | 49,8 % |
| — diamètre des particules | 0,1-0,4 μm |
| — Tg du polymère | 18 °C |
| — Tenue à l'eau | 15 min |

Un terpolymère acétate de vinyle/isobutène/« Versatate VEOVA 10 »® 80/10/10, préparé par polymérisation en émulsion en présence d'hydroxyéthylcellulose en proportions égales à celles du colloïde protecteur de l'exemple 1, possède une tenue à l'eau de 2 min.

Exemple 2

Préparation du colloïde protecteur

Dans un réacteur muni d'un agitateur, sont introduits :

— 1 000 g d'eau désionisée ;
— 19 g d'acrylamide ;
— 5,5 g d'acétate de sodium ;
— 19 g de tétradécylsulfonate de sodium ;
— 19 g de polyéthylène glycol de masse moléculaire 10 000.

L'air est éliminé par passage d'un courant d'azote qui est maintenu et le mélange est agité. Après dissolution, le mélange réactionnel est chauffé à 60 °C, température qui est maintenue. Dès que le mélange est à 60 °C, 0,8 g de persulfate d'ammonium en solution dans 100 cm³ d'eau est introduit dans le réacteur. Après 1 heure de réaction, le passage du courant d'azote et l'agitation sont interrompus.

Polymérisation

Après avoir fait le vide dans le réacteur, de l'éthylène est introduit jusqu'"à avoir une pression de 13 bars dans le réacteur, pression qui est maintenue constante pendant la durée de la polymérisation par l'addition d'éthylène.

Au mélange agité sont ajoutés 2 g de persulfate d'ammonium en solution dans 100 cm³ d'eau, puis en continu 1 700 g d'acétate de vinyle à débit constant pendant 10 heures. 20 minutes après le début de cette introduction, le mélange réactionnel est chauffé à 70 °C et maintenu à cette température, alors que sont introduits 5,7 g de persulfate d'ammonium en solution dans 400 cm³ d'eau à débit constant en 10 h.

Deux heures après la fin des introductions, le mélange est refroidi, la pression dans le réacteur est de 2 bars.

Après dégazage, un latex de copolymère acétate de vinyle/éthylène 88/12 est obtenu, qui présente les caractéristiques suivantes :

| | |
|---|---|
| — pH | 2,8 |
| — viscosité | 700 mPa.s |
| — concentration | 52 % |
| — diamètre des particules | 0,1-0,4 μm |
| — Tg du copolymère | 5 °C |

## Exemple 3

Préparation du colloïde protecteur

Dans un réacteur muni d'un agitateur, sont introduits :

— 1 000 g d'eau désionisée ;
— 14,5 g d'acrylamide ;
— 5,5 g d'acétate de sodium ;
— 19 g de tétradécylsulfonate de sodium ;
— 19 g de polyéthylène glycol de masse moléculaire 10 000.

L'air est éliminé par passage d'un courant d'azote qui est maintenu et le mélange est agité. Après dissolution, le mélange réactionnel est chauffé à 60 °C, température qui est maintenue. Dès que le mélange est à 60 °C, 0,8 g de persulfate d'ammonium en solution dans 100 cm³ d'eau est introduit dans le réacteur. Après 1 heure de réaction, le passage du courant d'azote et l'agitation sont interrompus.

Polymérisation

Après avoir fait le vide dans le réacteur, de l'éthylène est introduit jusqu'à avoir une pression de 13 bars dans le réacteur, pression qui est maintenue constante pendant la durée de la polymérisation par l'addition d'éthylène.

Au mélange agité sont ajoutés 2 g de persulfate d'ammonium en solution dans 100 cm³ d'eau, puis en continu 1 387 g d'acétate de vinyle à débit constant pendant 10 heures. 20 minutes après le début de cette introduction, le mélange réactionnel est chauffé à 70 °C et maintenu à cette température, alors que sont introduits simultanément en continu :

— 285 g de chlorure de vinyle à débit constant en 9 h 40 min ;
— 5,7 g de persulfate d'ammonium en solution dans 400 cm³ d'eau à débit constant en 10 h.

Deux heures après la fin des introductions, le mélange est refroidi, la pression dans le réacteur est de 3,5 bars.

Après dégazage, un latex de terpolymère acétate de vinyle/éthylène/chlorure de vinyle 73/12/15 est obtenu, qui présente les caractéristiques suivantes :

| | |
|---|---|
| — pH | 2,6 |
| — viscosité | 500 mPa.s |
| — concentration | 51,3 % |
| — diamètre des particules | 0,1-0,4 μm |
| — Tg du terpolymère | 17 °C |

## Exemple 4

Préparation du colloïde protecteur

Dans un réacteur muni d'un réfrigérant, d'une arrivée d'azote et d'un agitateur, sont introduits :

— 5 890 g d'eau désionisée ;
— 107 g d'acrylamide ;
— 43 g d'acétate de sodium ;
— 488 g d'une solution à 29,5 % de tétradécylsulfonate de sodium ;
— 144 g de polyéthylène glycol de masse moléculaire 10 000.

L'air est éliminé par passage d'un courant d'azote qui est maintenu pendant la préparation du colloïde. Le mélange est agité.

Après dissolution, la solution est chauffée à 60 °C, température qui est maintenue.

Dès que la solution est à 60 °C, 6 g de persulfate d'ammonium dans 20 cm³ d'eau sont introduits.

Après 1 heure de réaction, le passage d'azote est arrêté.

0 072 734

Préparation d'une semence

3,5 g de persulfate d'ammonium et 144 g d'acétate de vinyle sont ajoutés à la solution de colloïde.

Après 20 minutes, le milieu réactionnel est chauffé à 80 °C, maintenu à cette température pendant 1 heure, puis refroidi à température ambiante.

Polymérisation

Dans un réacteur, dans lequel le vide a été fait, on introduit successivement :

— 800 g de la semence obtenue précédemment ;
— 800 g d'eau désionisée.

Le mélange est agité et chauffé à 80 °C, température qui est maintenue pendant la durée de la réaction.

Dès que le mélange est à 80 °C, on lui ajoute 5 g de persulfate de potassium en solution dans 50 cm³ d'eau. On introduit alors simultanément, en continu et à débit constant :

— 197 g d'isobutène en 1 heure ;
— 19 g de persulfate de potassium dans 200 cm³ d'eau en 2 h 45 min ;
— un mélange de 1 506 g d'acétate de vinyle et de 197 g de « Versatate VEOVA 10 »® en 3 heures.

Deux heures après la fin des introductions, le mélange réactionnel est refroidi.

Un latex de terpolymère acétate de vinyle/isobutène/« Versatate VEOVA 10 »® 80/10/10 est obtenu, qui présente les caractéristiques suivantes :

|  |  |
|---|---|
| — pH | 2,7 |
| — viscosité | 1 080 mPa.s |
| — concentration | 52,8 % |
| — diamètre des particules | 0,1-0,4 $\mu$m |
| — Tg du terpolymère | 18 °C |
| — tenue à l'eau | 15 min |

**Revendications**

1. Procédé de préparation de latex de copolymères acétate de vinyle-oléfine qui consiste à copolymériser en émulsion aqueuse de l'acétate de vinyle avec au moins une oléfine et éventuellement au moins un monomère copolymérisable en présence de 0,05 à 4,5 parties en poids d'un initiateur, de 0,1 à 3 parties en poids d'un émulsifiant et de 0,1 à 5 parties en poids d'un colloïde protecteur pour 100 parties en poids de monomères et est caractérisé en ce que le colloïde protecteur est constitué a) de 15 à 70 % d'un polymère d'amide soluble dans l'eau et b) de 30 à 85 % en poids d'un polymère d'éthylène glycol, de masse moléculaire comprise entre 1 000 et 50 000, soluble dans l'eau, ledit polymère d'amide étant au moins un homopolymère d'un amide choisi parmi l'acrylamide, le méthacrylamide, les dérivés N-alkylés éventuellement substitués de l'acrylamide ou du méthacrylamide et/ou au moins un copolymère d'au moins deux desdits amides entre eux, ledit colloïde protecteur étant mis en œuvre sous forme d'une solution aqueuse contenant de 0,1 à 15 parties en poids de colloïde pour 100 parties d'eau.

2. Procédé selon la revendication 1, caractérisé en ce que les dérivés Ñ-alkylés d'acrylamide ou de méthacrylamide sont des dérivés N-alkylés ($C_1$-$C_2$) éventuellement substitués par des groupes amine, hydroxy, alcoxy ($C_1$-$C_4$).

3. Procédé selon la revendication 1 ou 2, caractérisé en ce que le polymère d'amide est éventuellement réticulé par un agent de réticulation hydrosoluble.

4. Procédé selon l'une des revendications 1 à 3, caractérisé en ce que le polymère d'amide est obtenu par polymérisation en solution aqueuse d'au moins un amide, à une concentration de 0,1 à 7 % en poids, en présence de 0,1 à 10 % en poids du ou des amides d'un initiateur radicalaire hydrosoluble et/ou de rayonnements ultra-violets à une température de 0 à 90 °C.

5. Procédé selon l'une des revendications 1 à 4, caractérisé en ce que l'homopolymère d'éthylène glycol est un mélange d'homopolymères d'éthylène glycol.

6. Procédé selon l'une des revendications 1 à 5, caractérisé en ce que l'oléfine possède 2 à 4 atomes de carbone.

7. Procédé selon l'une des revendications 1 à 6, caractérisé en ce que le monomère copolymérisable avec l'acétate de vinyle est choisi parmi les esters vinyliques d'acides monocarboxyliques ($C_1$-$C_{12}$) ramifiés ou non et/ou les esters d'acides insaturés mono- ou dicarboxyliques ($C_3$-$C_6$) et d'alcool ($C_1$-$C_{10}$) et/ou les halogénures de vinyle et de vinylidène.

8. Procédé selon l'une des revendications 1 à 7, caractérisé en ce qu'un polymère semence, semblable ou différent du polymère à obtenir, est présent dans le milieu de polymérisation.

7

**0 072 734**

Claims

1. A process for the preparation of latexes of vinyl acetate-olefin copolymers which comprises copolymerisation in aqueous emulsion of vinyl acetate with at least one olefin and optionally at least one copolymerisable monomer in the presence of from 0.05 to 4.5 parts by weight of an initiator, from 0.1 to 43 parts by weight of an emulsifier and from 0.1 to 5 parts by weight of a protective colloid for 100 parts by weight of monomers, and is characterised in that the protective colloid comprises a) from 15 to 70 % of a water-soluble amide polymer and b) from 30 to 85 % by weight of an ethylene glycol polymer having a molecular weight of from 1 000 to 50 000 and being water-soluble, said amide polymer being at least one homopolymer of an amide selected from acrylamide, methacrylamide, N-alkylated derivatives, which are optionally substituted, of acrylamide or methacrylamide and/or at least one copolymer of at least two and said amides together, said protective colloid being used in the form of an aqueous solution containing from 0.1 to 15 parts by weight of colloid for 100 parts of water.

2. A process according to claim 1, characterised in that the N-alkylated acrylamide or methacrylamide derivatives are N-alkylated $(C_1-C_2)$ derivatives which are optionally substituted by amine, hydroxy or $(C_1-C_4)$ alkoxy groups.

3. A process according to claim 1 or claim 2, characterised in that the amide polymer is optionally cross-linked by a water-soluble cross-linking agent.

4. A process according to one of claims 1 to 3, characterised in that the amide polymer is produced by polymerisation in aqueous solution of at least one amide, at a level of concentration of from 0.1 to 7 % by weight, in the presence of from 0.1 to 10 % by weight of the amide or amides of a water-soluble radical-forming initiator and/or ultra-violet radiation at a temperature of from 0 to 90 °C.

5. A process according to one of claims 1 to 4, characterised in that the ethylene glycol homopolymer is a mixture of ethylene glycol homopolymers.

6. A process according to one of claims 1 to 5 characterised in that the olefin has from 2 to 4 carbon atoms.

7. A process according to one of claims 1 to 6, characterised in that the monomer which is copolymerisable with the vinyl acetate is selected from vinyl esters of $(C_1-C_{12})$ monocarboxylic acids which may or may not be branched and/or esters of unsaturated mono- or dicarboxylic $(C_3-C_6)$ acids and alcohol $(C_1-C_{10})$ and/or vinyl and vinylidene halides.

8. A process according to one of claims 1 to 7, characterised in that a seed polymer which is similar to or different from the polymer to be produced is present in the polymerisation medium.

Patentansprüche

1. Verfahren zur Herstellung von Latex aus Vinylacetat/Olefin-Copolymeren, das im Copolymerisieren in wässriger Emulsion von Vinylacetat mit wenigstens einem Olefin und gegebenenfalls wenigstens einem copolymerisierbaren Monomeren in Gegenwart von 0,05 bis 4,5 Gewichtsteilen eines Initiators, 0,1 bis 3 Gewichtsteilen eines Emulgiermittels und 0,1 bis 5 Gewichtsteilen eines Schutzkolloids auf 100 Gewichtsteile des Monomeren besteht und dadurch gekennzeichnet ist, daß das Schutzkolloid besteht aus a) 15 bis 70 % eines Polymeren eines wasserlöslichen Amids und b) 30 bis 85 Gewichtsprozent eines wasserlöslichen Polymeren von Ethylenglykol einer Molmasse zwischen 1 000 und 50 000, wobei das Polymere des Amids wenigstens ein Homopolymeres eines Amids, das aus Acrylamid, Methacrylamid, den gegebenenfalls substituierten N-Alkylderivaten des Acrylamids oder Methacrylamids, und/oder wenigstens ein Copolymer von wenigstens zweien der genannten Amide untereinander ist, wobei das Schutzkolloid in Form einer wässrigen Lösung eingesetzt wird, die zwischen 0,1 und 15 Gewichtsteilen Kolloid auf 100 Teile Wasser enthält.

2. Verfahren nach Anspruch 1, dadurch gekennzeichnet, daß die N-Alkyl-Derivate des Acrylamids oder Methacrylamids die gegebenenfalls mit Amin-, Hydroxy-, Alkoxy $(C_1-C_4)$-Gruppen substituierten N-Alkyl $(C_1-C_2)$-Derivate sind.

3. Verfahren nach Anspruch 1 oder 2, dadurch gekennzeichnet, daß das Polymere des Amids gegebenenfalls durch ein wasserlösliches Vernetzungsmittel vernetzt wird.

4. Verfahren nach einem der Ansprüche 1 bis 3, dadurch gekennzeichnet, daß das Polymere des Amids erhalten wird durch Polymerisation in wässriger Lösung von wenigstens einem Amid bei einer Konzentration von 0,1 bis 7 Gewichtsprozent in Gegenwart von 0,1 bis 10 % des Gewichts des Amids oder der Amide, eines wasserlöslichen Radikalstarters und/oder von UV-Strahlung bei einer Temperatur von 0 bis 90 °C.

5. Verfahren nach einem der Ansprüche 1 bis 4, dadurch gekennzeichnet, daß das Homopolymere von Ethylenglykol eine Mischung von Homopolymeren von Ethylenglykol ist.

6. Verfahren nach einem der Ansprüche 1 bis 5, dadurch gekennzeichnet, daß das Olefin 2 bis 4 Kohlenstoffatome besitzt.

7. Verfahren nach einem der Ansprüche 1 bis 6, dadurch gekennzeichnet, daß das mit dem Vinylacetat copolymerisierbare Monomere ausgewählt wird unter den Vinylestern von verzweigten oder unverzweigten $(C_1-C_{12})$-Monocarbonsäuren und/oder den Estern aus ungesättigten Mono- oder Di-

**0 072 734**

carbonsäuren ($C_3$-$C_6$) und einem ($C_1$-$C_{10}$)-Alkohol und/oder den Vinyl- und Vinylidenhalogeniden.

8. Verfahren nach einem der Ansprüche 1 bis 7, dadurch gekennzeichnet, daß im Polymerisationsmedium ein Saatpolymeres, das dem zu erhaltenden Polymer gleich oder von ihm verschieden sein kann, anwesend ist.